# EUROPEAN PATENT APPLICATION

(11) **EP 2 083 557 A1**
(43) Date of publication of application: **29.07.2009**
(21) Application number: 09151062.8
(22) Date of filing: 22.01.2009
(51) Int. Cl.: H04M 1/2745, H04M 1/60

(54) **Vehicle onboard telephone device and method of display of call history in such a device**

(30) Priority: 23.01.2008 JP 2008013139
(71) Applicant: Nissan Motor Co., Ltd., Kanagawa 221-0023 (JP)
(72) Inventor: Miwa, Chie, Atsugi-shi Kanagawa 243-0123 (JP)
(74) Representative: Holmes, Matthew William

(57) **Abstract**

Teachings herein enable evaluation of the temporal order of the call history of a portable communication device and the appropriate display of the call history in a desired order. A telephone number acquisition part acquires the telephone number of an outgoing or incoming call when such a call is performed with a telephone set. A history acquisition part acquires the call history of the telephone set after the call ends, and an order evaluation part evaluates the temporal order of the call history based on the position of the telephone number of the call in the call history. When there is a request for display of the call history of telephone set, a display control part checks the temporal order of the call history and causes the call history to be displayed in the prescribed temporal order on a display.

## Description

The present invention relates generally to a vehicle onboard telephone device and method and particularly, but not exclusively to a device and method for displaying the call history of incoming and outgoing calls performed by a communication device in communication with the vehicle onboard telephone device. Aspects of the invention relate to an apparatus, to a device, to a method and to a vehicle.

Some onboard hands-free telephone devices for vehicles fetch telephone directory data and the call history from portable communication equipment (e.g. a telephone), and use the data in making calls (for example, see Japanese Kokai Patent Application No. 2005 354269). However, due to problems pertaining to compatibility between the portable communication equipment and the vehicle onboard equipment, the vehicle onboard equipment may be unable to acquire time data together with the call history from the portable communication equipment.

It is an aim of the present invention to address this issue and to improve upon such known technology. Embodiments of the present invention may provide an apparatus, device or method that evaluates the call history of the portable communication equipment in temporal or chronological order and enables appropriate display of the call history in a prescribed order. Even when time data cannot be acquired together with the call history, by identifying the most recent telephone number for a counterpart who is called or from whom a call is received, it is possible to evaluate the storage order of the acquired call history and to display the acquired call history in reverse chronological order or chronological order. Other aims and advantages of the invention will become apparent from the following description, claims and drawings.

Aspects of the invention therefore provide an apparatus, a method and a vehicle as claimed in the appended claims.

According to another aspect of the invention for which protection is sought, there is provided a vehicle onboard telephone device in communication with a communication device, comprising a history acquisition part for acquiring a call history from the communication device, an evaluation part for evaluating the temporal order of the call history as one of ascending order and descending order, a telephone number acquisition part for acquiring a telephone number corresponding to a call operation when the call operation is performed by the communication device and a history display part for displaying the call history, wherein the vehicle onboard telephone device enters the telephone number of the call operation into the call history based on the temporal order.

The device may comprise a controller configured to control the communication device to perform an initial call operation of calling a prescribed telephone number.

In an embodiment, the history acquisition part acquires the call history of the communication device after completion of the initial call operation; and wherein the evaluation part evaluates the temporal order of the call history as one of ascending order and descending order based on the position of the prescribed telephone number in the outgoing call history.

The device may comprise a controller configured to request an external transmitter to perform an initial call operation of calling the communication device.

In an embodiment, the history acquisition part acquires the call history of the communication device after completion of the initial call operation; and wherein the evaluation part evaluates the temporal order of the call history as one of ascending order and descending order based on the position of the telephone number corresponding to the external transmitter in the call history.

The device may comprise a storage part configured to store an identifier corresponding to the communication device with a temporal order flag indicating the temporal order of the call history, wherein the evaluation part evaluates the temporal order of the call history based on the temporal order flag when the communication device corresponding to the identifier is in communication with the vehicle onboard telephone device.

In an embodiment, the call history includes telephone numbers of at least one of incoming calls and outgoing calls.

In an embodiment, the communication device is a cell phone. The cell phone may be wirelessly in communication with the vehicle onboard telephone device.

According to a further aspect of the invention, there is provided a vehicle onboard telephone device in communication with a portable communication device, comprising means for acquiring the call history of the portable communication device, means for determining the temporal order of the call history as one of ascending order and descending order, means for acquiring a telephone number corresponding to a call operation performed by the portable communication device, means for entering the telephone number into the call history in a position based on the temporal order and means for displaying the call history according to the temporal order.

According to a still further aspect of the invention for which protection is sought, there is provided a method of displaying a call history of a portable communication device in communication with a vehicle onboard telephone device, the method comprising acquiring the call history of the portable communication device, determining the temporal order of the call history as one of ascending order and descending order, acquiring a telephone number corresponding to a call operation performed by the portable communication device, entering the telephone number into the call history in a position based on the temporal order and displaying the call history according to the temporal order.

The method may comprise controlling the portable communication device to perform the call operation by calling a prescribed telephone number.

In an embodiment, determining the temporal order of the call history comprises evaluating the temporal order of the call history as one of ascending order and descending order based on a position of the prescribed telephone number in an outgoing call history of the portable communication device.

The method may comprise requesting an external transmitter call the portable communication device.

In an embodiment, determining the temporal order of the call history comprises evaluating the temporal order of the call history as one of ascending order and descending order based on a position of a telephone number corresponding to the external transmitter in the call history of the portable communication device.

The method may comprise storing an identifier corresponding to the portable communication device with a temporal order flag indicating the temporal order of the call history.

In an embodiment, determining the temporal order of the call history comprises evaluating the temporal order of the call history based on the temporal order flag when the portable communication device corresponding to the identifier is in communication with the vehicle onboard telephone device.

For example, a vehicle onboard telephone device in communication with a communication device may include a history acquisition part for acquiring a call history from the communication device, an evaluation part for evaluating the temporal order of the call history as one of ascending order and descending order, a telephone number acquisition part for acquiring a telephone number corresponding to a call operation when the call operation is performed by the communication device, and a history display part for displaying the call history. This vehicle onboard telephone device enters the telephone number of the call operation into the call history based on the temporal order.

Within the scope of this application it is envisaged that the various aspects, embodiments, examples, features and alternatives set out in the preceding paragraphs, in the claims and/or in the following description and drawings may be taken individually or in any combination thereof.

The present invention will now be described, by way of example only, with reference to the accompanying drawings, in which:
FIG. 1A is a block diagram illustrating a vehicle onboard telephone device according to one embodiment;
FIG. 1B is a block diagram illustrating a vehicle onboard telephone device according to another embodiment;
FIG. 2 is a flow chart illustrating the processing performed in the vehicle onboard telephone device of FIG. 1A;
FIG. 3 is a flow chart continued from FIG. 2;
FIGS. 4A-4C are diagrams illustrating the temporal order of the call history;
FIG. 5 is a flow chart illustrating the processing performed in the vehicle onboard telephone device according to another embodiment;
FIG. 6 is a sequence chart illustrating the processing in the vehicle onboard telephone device according to the embodiment of FIG. 5;
FIG. 7 is a flow chart illustrating the processing performed in the vehicle onboard telephone device in another embodiment; and
FIG. 8 is a sequence chart illustrating the processing in the vehicle onboard telephone device according to the embodiment of FIG. 7.

The vehicle onboard telephone device includes hands-free telephone device 10 that uses telephone set(s) 1a, 1b as portable communication equipment. Telephone set(s) 1 a, 1 b may be cell phone(s) mounted in the vehicle or carried into the vehicle. In addition to the dial-up calling function, receiving function and other basic functions, hands-free telephone device 10 may also have at least the following functions: call history storage function, call history display function and telephone directory function.

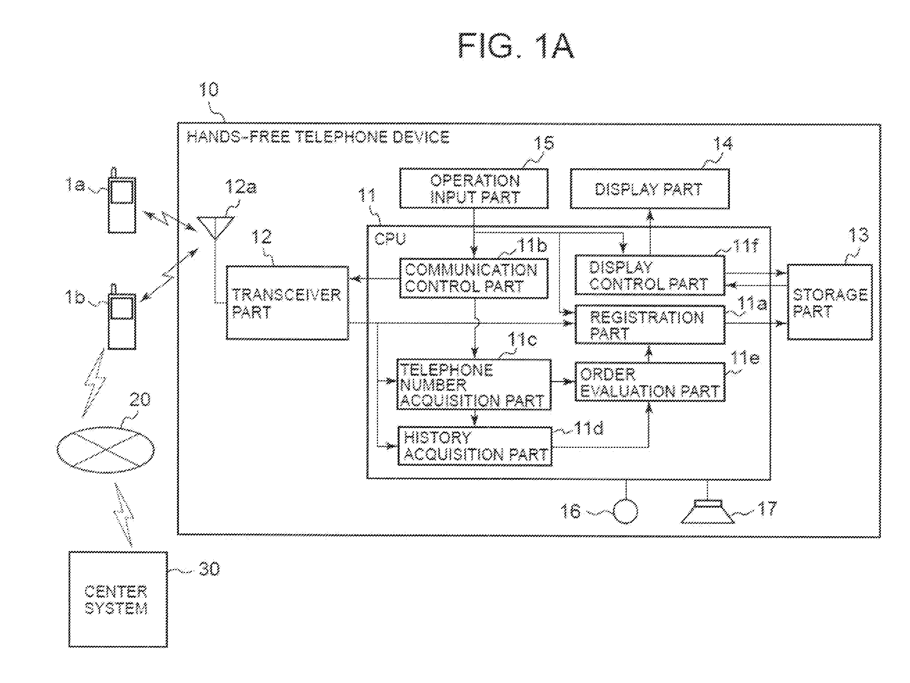

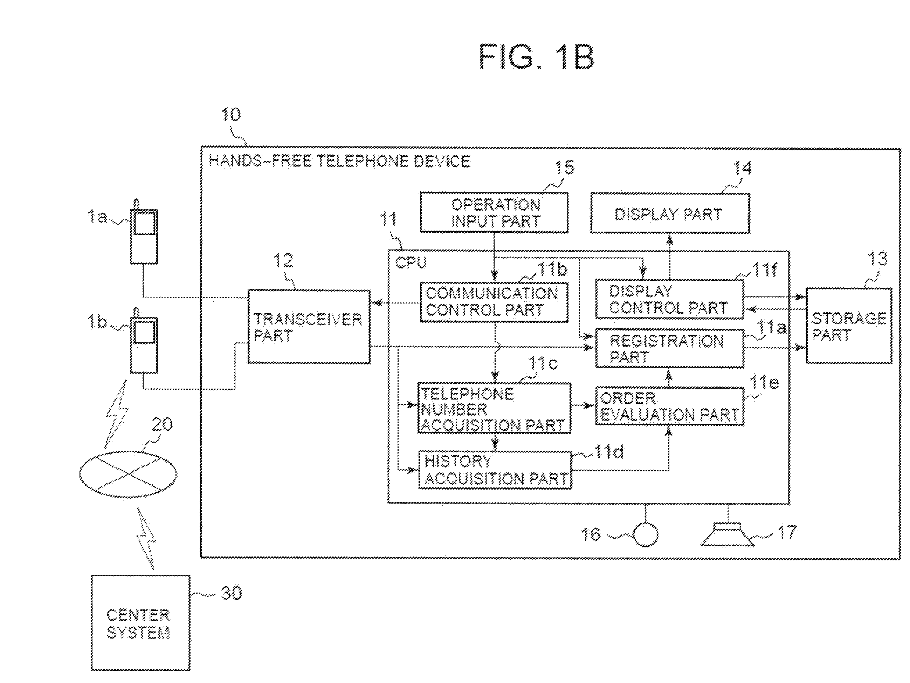

Hands-free telephone device 10 communicates with and operates telephone set(s) 1a, 1b by, for example, a direct or wireless connection. Through the direct or wireless connection, hands-free telephone device 10 may permit conversation or other calling functions without the user having to directly touch and operate telephone sets 1 a, 1b. FIG. 1A illustrates hands-free telephone device 10 wirelessly connected to telephone sets 1a, 1b, and FIG. 1B illustrates hands-free telephone device 10 directly connected to telephone sets 1 a, 1 b.

Referring to FIG. 1A, hands-free telephone device 10 has the following parts: CPU 11, transceiver 12, storage part 13, display 14, operation input part 15, microphone 16 and speaker 17.

Transceiver 12 is wirelessly connected to telephone set(s) 1a, 1b to permit the exchange of instruction signals and information. In the present embodiment, the Bluetooth® wireless communication system is implemented as the wireless system.

Consequently, transceiver 12 includes a part for performing processing for the Bluetooth® lower layer, a part for defining the communication protocol and a part for performing processing for the upper layer.

The transceiver 12 applies information received via transceiving antenna 12a, such as the call history of telephone set(s) 1a, 1b, to CPU 11. At the same time, transceiver 12 sends instruction signals output from CPU 11 to telephone set(s) 1 a, 1 b via transceiving antenna 12a.

In addition to transceiver 12, the following parts are also connected to CPU 11: storage part 13, display 14, operation input part 15, microphone 16 and speaker 17.

Storage part 13 can include, for example, a HDD (hard disk drive) and a memory to store information sent from telephone set(s) 1a, 1b and user data input from operation input part 15. Storage part 13 stores the identifier (device address) of each of the telephone sets 1a, 1b that are registered as usable telephone sets in hands-free telephone device 10. In addition, the call history, telephone directory data, etc., of telephone sets 1 a, 1b are also stored and correlated to the device address for each telephone set.

The call history of each telephone set stored in storage part 13, for example, can be a combination of the history of outgoing calls and the history of incoming calls involving the telephone set. However, storage part 13 may also separately store the incoming call history and the outgoing call history.

For example, display 14 may be a liquid crystal monitor. For telephone set(s) 1 a, 1 b registered as telephone sets that can be used with hands-free telephone device 10, display 14 can present the telephone numbers of the call history as a list.

Operation input part 15 can include buttons, a touch panel, or the like arranged on the periphery of display 14. Operation input part 15 is an interface for inputting the various types of user requests as instructions to hands-free telephone device 10, such as registering the telephone set with hands-free telephone device 10, displaying the call history of the telephone set, etc.

Microphone 16 and speaker 17 are, for example, used for input of the user's voice and output of the counterpart's voice, respectively, when the user engages in hands-free telephone calling.

CPU 11 has the following parts: registration part 11 a, communication control part 11 b, telephone number acquisition part 11c, history acquisition part 11 d, order evaluation part 11e and display control part 11f.

Registration part 11a stores the information necessary for using telephone set(s) 1 a, 1b with hands-free telephone device 10. For example, storage part 13 stores the device address of telephone set(s) 1 a, 1b, the telephone directory data and the call history of each telephone set.

Communication control part 11 b controls the connection between telephone set(s) 1a, 1b and hands-free telephone device 10 for outgoing/incoming calling via telephone set(s) 1 a, 1 b.

When an outgoing/incoming call is made via telephone set(s) 1a, 1b, telephone number acquisition part 11c acquires the counterpart's telephone number that is called or from whom the call is received.

After an outgoing/incoming call via telephone set(s) 1a, 1b has ended, history acquisition part 11d acquires the call history stored in the memory of telephone set(s) 1 a, 1 b.

Order evaluation part 11e evaluates the temporal order of the call history based on the position of the counterpart's telephone number that is called or from whom a call is received.

Display control part 11f displays the information requested by the user on display 14 based on the instructions input by the user via operation input part 15. For example, the call history of telephone set(s) 1 a, 1 b is displayed on display 14.

Registration part 11a, communication control part 11b, telephone number acquisition part 11c, history acquisition part 11 d, order evaluation part 11e and display control part 11f are realized by the CPU in hands-free telephone device 10 by executing a program stored in ROM and storage part 13.

FIG. 1B is a block diagram illustrating a vehicle onboard telephone device in another embodiment of the invention. FIG. 1B is similar to the block diagram of FIG. 1A except that, as stated previously, transceiver 12 is directly connected to telephone set(s) 1 a, 1 b rather than being wirelessly connected.

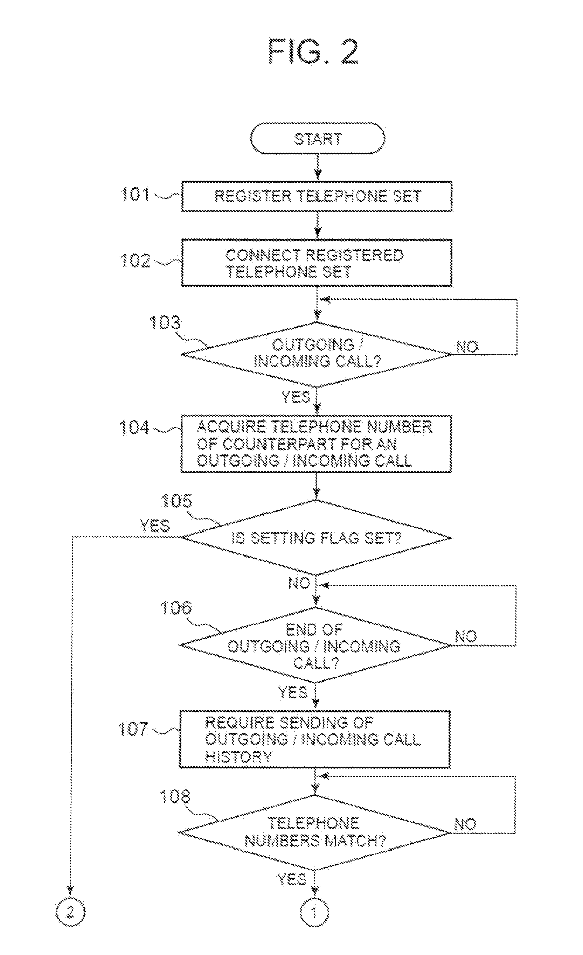

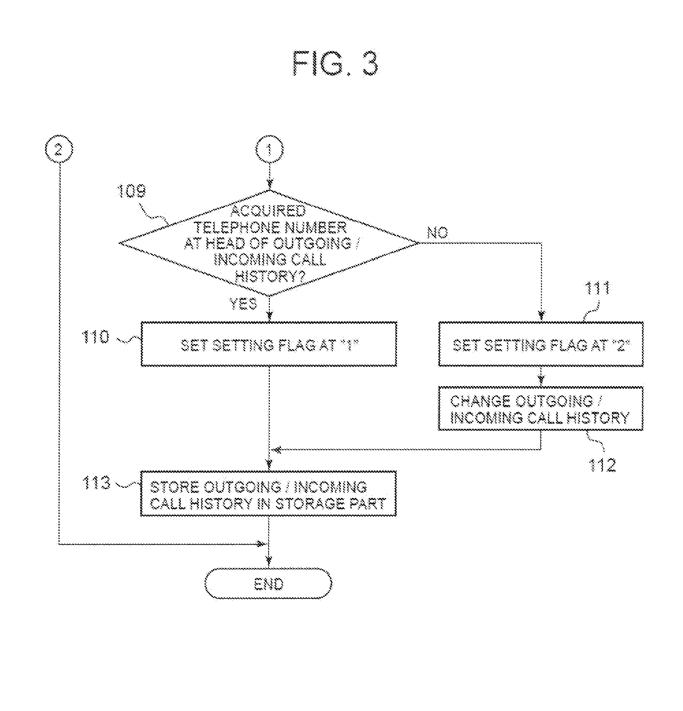

FIGS. 2 and 3 are diagrams illustrating the processing performed in hands-free telephone device 10.

In the following explanation, as an example, telephone set 1a among telephone set(s) 1a, 1b is usable with hands-free telephone device 10, and outgoing and/or incoming calling is explained with reference to telephone set 1a.

In step 101, registration part 11a registers telephone set 1 a as a cell phone that can be used with hands-free telephone device 10.

More specifically, the user inputs an instruction on operation input part 15 to register telephone set 1a with hands-free telephone device 10. As a result, communication control part 11 b creates a Bluetooth® connection via, for example, transceiver 12, with telephone set 1 a. Consequently, registration part 11a acquires from telephone set 1a the device address DA1 that identifies telephone set 1a and stores it in storage part 13. As a result, telephone set 1a is registered as a telephone set usable with hands-free telephone device 10.

In this case, in addition to device address DA1, registration part 11a also acquires the telephone directory data and the call history data stored in telephone set 1 a and causes them to be stored and correlated with device address DA1.

Also, registration part 11 a causes the user settings and user data input via operation input part 15 during registration of telephone set 1a to be stored and correlated with device address DA1.

As a result, hands-free telephone device 10 uses the acquired telephone directory data and call history data to perform outgoing/incoming calls by means of telephone set 1a. Consequently, the user can call a counterpart in a hands-free fashion without touching telephone set 1 a.

After hands-free telephone device 10 has been registered with telephone set 1a in step 102, communication control part 11 b causes hands-free telephone device 10 and telephone set 1a to be connected to each other and enables the operation of telephone set 1 a by means of hands-free telephone device 10.

In step 103, an evaluation is made as to whether there is an outgoing or an incoming call (hereinafter to be referred to as outgoing/incoming call) via telephone set 1 a.

When there is an outgoing/incoming call in step 103, telephone number acquisition part 11c acquires the counterpart's telephone number that is called or from whom a call is received in step 104.

For example, when the user makes a call from telephone set 1a via operation input part 15, telephone number acquisition part 11c acquires from communication control part 11 b the telephone number of the caller being called, called herein the outgoing caller.

When there is an incoming call to telephone set 1a, the telephone number of the incoming caller is acquired from telephone set 1 a.

When telephone set 1a is used to perform outgoing/incoming calling, in step 105 history acquisition part 11d uses storage part 13 as a reference to check whether the setting flag for the call history of telephone set 1 a is set.

The setting flag indicates whether the temporal order of the call history stored in the memory of telephone set 1a has been specified. Here, the setting flag indicates the temporal order (either ascending order or descending order) in which the counterpart's telephone number from the call is set in the call history of telephone set 1a. A setting flag value of "0" indicates that the temporal order has not been specified.

Consequently, history acquisition part 11d determines that the setting flag is set when the setting flag value for telephone set 1 a is a value other than "0" and further determines that the setting flag is not set when the setting flag value is "0".

In step 105, if the setting flag is set, the telephone number of the outgoing/incoming call acquired by the telephone number acquisition part 11c is entered into the call history stored in the storage part 13 by the registration part 11a based on the temporal order of the call history. That is, the telephone number of the outgoing/incoming call is entered into the call history at the correct position in dependence on the ascending or descending temporal order according to the value of the setting flag.

After the telephone number of the outgoing/incoming call has been entered in the call history, processing comes to an end.

On the other hand, if in step 105 the setting flag is not set, flow proceeds to the processing of step 106.

In step 106, history acquisition part 11d checks whether an outgoing/incoming call via telephone set 1 a has come to an end.

More specifically, history acquisition part 11d checks whether an instruction requesting the termination of an outgoing/incoming call has been input via operation input part 15. When this instruction is input, history acquisition part 11d determines that the outgoing/incoming call has come to an end.

When an outgoing/incoming call via telephone set 1a has come to an end, history acquisition part 11d requests from communication control part 11b transmission of the call history of telephone set 1 a from telephone set 1 a in step 107.

When the call history transmitted from telephone set 1a is received, history acquisition part 11d checks whether the counterpart's telephone number acquired by telephone number acquisition part 11c matches the telephone number at the beginning or end of the received call history in step 108. This inquiry checks whether the call history is that transmitted by telephone set 1a from which the call history was requested.

In the following, the temporal order of the call history is explained.

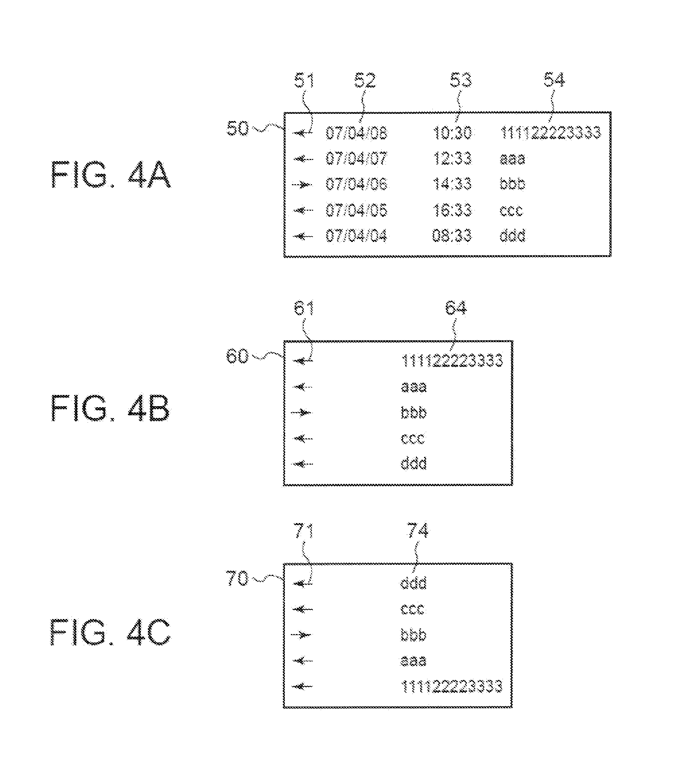

FIGS. 4A-4C illustrate the temporal order of the telephone numbers in the call history. FIG. 4A is a diagram illustrating an example of the call history stored on the telephone set 1a; FIG. 4B is a diagram illustrating an example of a call history acquired by hands-free telephone device 10 from telephone set 1a; and FIG. 4C is a diagram illustrating another state of the call history acquired by hands-free telephone device 10 from telephone set 1 a.

Arrows 51, 61, 71 indicate outgoing or incoming calls. In FIGS. 4A-4C, a leftward arrow indicates an outgoing call, while a rightward arrow indicates an incoming call. Also, date 52 indicates the call date, and time 53 indicates the call time. Telephone numbers 54, 64, and 74 indicate the counterpart's telephone number. The call date of each call can include the call date of outgoing calls or incoming calls. Likewise, the call time of each call can include the call time of outgoing calls or incoming calls.

In FIGS. 4A-4C, only the telephone numbers used in explaining the temporal order of the call history, explained in more detail below, are shown as numerals, whereas the other telephone numbers in the call history are schematically represented by letters aaa, bbb, etc.

In call history 50 stored in telephone set 1a, the counterparts' telephone numbers are arranged by call time according to reverse chronological order (ascending order) or chronological order (descending order).

For example, as shown in FIG. 4A, call history 50 is stored on telephone set 1a. Assuming the counterpart's telephone number of the most recent call is 111122223333, then this telephone number is displayed at the top of call history 50, and as the display moves toward the bottom of the call history, the call date becomes older. Accordingly, the call history in telephone set 1a is displayed in reverse chronological order (ascending order).

As shown in FIG. 4B, the call history acquired by history acquisition part 11d of hands-free telephone device 10 is call history 60. When the telephone number acquired by telephone number acquisition part 11c is 111122223333, the telephone number is displayed at the highest level (beginning) of call history 60.

Alternatively, for call history 70, as shown in FIG. 4C, telephone number of 111122223333 is displayed at the lowest level (end) of call history 70.

Portable communication equipment may store the call history and the call times together in order. However, due to problems pertaining to compatibility between the portable communication equipment and the vehicle onboard equipment, the vehicle onboard equipment may be unable to acquire time data together with the call history from the portable communication equipment.

Accordingly, it may not be possible to evaluate the order of the history from the acquired call history in the vehicle onboard equipment. In these instances, it may not be possible, for example, to display the call history in a reverse chronological order, and the user may be inconvenienced.

In contrast, in embodiments of the invention, call history 60 or 70 is acquired as shown in FIGS. 4B or 4C, and history acquisition part 11d evaluates whether the counterpart's telephone number for the call matches the telephone number at the beginning of call history 60 or the end of call history 70.

When it is determined that the telephone numbers match in step 108, order evaluation part 11e checks whether the counterpart's telephone number for the call, as specified by telephone number acquisition part 11c, is located at the beginning of the received call history in step 109. This inquiry checks whether the temporal order of the counterparts' telephone numbers in the call history of telephone set 1 a is in ascending order.

Consequently, assuming the counterpart's telephone number is 111122223333, and the telephone number order in the acquired outgoing call history is call history 60 as shown in FIG. 4B, it is concluded that the counterpart's telephone number of the specified call is located at the beginning of the acquired call history.

When it is concluded in step 109 that the position is at the beginning of the call history, order evaluation part 11e sets the value of the setting flag at "1" in step 110, which indicates that the telephone numbers in the call history are in ascending order.

In call history 60, as shown in FIG. 4B, the counterpart's telephone number of the most recent call is located at the top, and as the positions move from the lower level upward, the call time is more recent.

On the other hand, when it is concluded that the position is not at the beginning of the call history, order evaluation part 11e sets the value of the setting flag to "2" in step 111, which indicates that the temporal order of the call history is descending order.

Consequently, when the counterpart's telephone number is not at the beginning of the call history, then the counterpart's telephone number can be at the end.

As shown in FIG. 4C, the counterpart's telephone number of the most recent call is located at the bottom, and as the positions move from the bottom upward, the call time is older. Consequently, the value of the setting flag is set to "2", which indicates that the temporal order of the call history is in descending order.

In step 112, order evaluation part 11e changes the temporal order of the telephone numbers in the received call history by reversing the order to ascending order. This reversal is to standardize the temporal call history order for various telephone sets stored in storage part 13.

In step 113, together with the setting flag, registration part 11a causes the received call history for telephone set 1 a to be stored in storage part 13 correlated with device address DA1.

As a result, when display of the call history of telephone set 1a is requested by a user instruction that is input via operation input part 15, display control part 11f causes the call history of telephone set 1 a stored in storage part 13 to be displayed on display 14 in the order requested by the user (for example, ascending order).

Also, when hands-free telephone device 10 newly acquires the call history of telephone set 1a, the setting flag can be used as a reference for specifying the temporal order of the call history, and the acquired temporal orders for the call histories in storage part 13 are all standardized as ascending order. As a result, it is possible to omit subsequent evaluation of the temporal order of the call history.

As explained above, the present embodiment pertains to a system having telephone set(s) 1a, 1b and hands-free telephone device 10 connected to the telephone set(s) 1a, 1b. Here, hands-free telephone device 10 includes: telephone number acquisition part 11c, which acquires the counterpart's telephone number when telephone set(s) 1a, 1b perform an outgoing/incoming call, history acquisition part 11d, which acquires the call history of telephone set 1 when the outgoing/incoming call has come to an end, order evaluation part 11e that evaluates the temporal order of the call history based on the position of the counterpart's telephone number in the call history, and display control part 11f, which checks the result of evaluation of the temporal order of the call history of telephone set 1 and which displays the call history in a prescribed temporal order.

As a result, even if it is not possible to acquire the time data together with the call history when hands-free telephone device 10 acquires the call history from telephone set 1a, it is possible, by specifying the counterpart's telephone number of the most recent call, to determine the storage order of the acquired call history and to display the acquired call history in reverse chronological order or in chronological order. Consequently, it is possible to improve convenience for the user.

Order evaluation part 11e stores the evaluation result of the temporal order of the call history of telephone set(s) 1 a, 1 b together with the device address of telephone set(s) 1 a, 1 b for which evaluation of the temporal order of the outgoing-/incoming-call history has been performed in storage part 13. Then, when telephone set(s) 1 a, 1b with registered device addresses are connected to hands-free telephone device 10, the evaluation result stored in storage part 13 is referenced, and the temporal order of the call history of telephone set(s) 1 a, 1 b is thereby determined.

As a result, it is possible, by means of the intrinsic identifier assigned to telephone set(s) 1 a, 1 b, to determine whether the temporal order of the call history of telephone set(s) 1a, 1b connected to hands-free telephone device 10 has been evaluated. Consequently, once evaluation of the temporal order has been performed, it is possible to characterize the history without performing later evaluations one-by-one, which results in reduction of unnecessary communication and burden on the user.

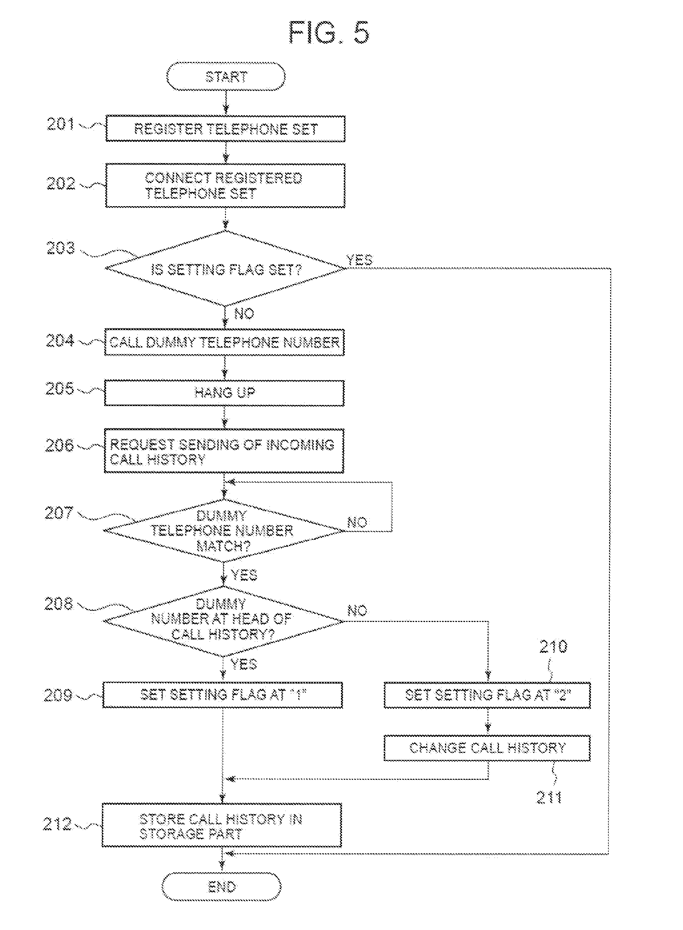

In the following, another embodiment of the processing in hands-free telephone device 10 is explained with reference to the flow chart of FIG. 5.

In the processing performed in this embodiment, hands-free telephone device 10 specifies the temporal order of the call history of a telephone set(s) 1a, 1b without waiting for an outgoing/incoming call via telephone set(s) 1 a, 1 b.

In the following example, specifying of the temporal order of the call history of telephone set 1 a from among the portable telephone set(s) 1 a, 1 b is presented as an example.

In storage part 13 of hands-free telephone device 10, the outgoing call history and incoming call history for telephone set(s) 1a, 1b are stored, and setting flags are prepared for the outgoing call history and incoming call history, respectively..

Referring to FIG. 5, since the processing performed in steps 201 and 202 is the same as that in steps 101 and 102 of FIG. 2, it will not be explained in detail again.

In step 203, history acquisition part 11d uses storage part 13 as a reference in checking whether the setting flag for the call history of telephone set 1 a has been set.

If in step 203 the setting flag is set, which means, for example, that the call history of the telephone set 1a is stored in the storage part 13 and the temporal order thereof is established, the processing comes to an end. In this case, the telephone numbers of subsequent incoming/outgoing calls are acquired by the telephone number acquisition part 11c and are entered into the call history stored in the storage part 13 by the registration part 11a based on the temporal order of the call history.

That is, the telephone number for the or each outgoing/incoming call is entered into the call history at the appropriate position in dependence on the ascending or descending temporal order according to the value of the setting flag. For example, where the call history is stored in ascending order, the telephone number for each subsequent incoming/outgoing call is entered at the highest level (beginning) of the call history.

On the other hand, if in step 203 the setting flag is not set, flow proceeds to the processing of step 204.

In step 204, communication control part 11 b sends a request to telephone set 1 a to place an outgoing call to a preset dummy telephone number, and a call is made from telephone set 1 a to the dummy telephone number.

In addition, after a prescribed time has elapsed since the request for an outgoing call to the dummy telephone number, communication control part 11 b outputs a request to end the call in step 205, and the call from telephone set 1a to the dummy telephone number is terminated.

As a result, the dummy telephone number is stored together with the calling time in the outgoing call history of the memory of telephone set 1 a.

A telephone number selected by telephone set 1 a or a telephone number of a preset central system is adopted as the dummy telephone number. A scheme can also be adopted in which instead of a prescribed telephone number, the dummy telephone number is selected as a transmission of "0" or transmission of "1" or another 1-digit number.

In step 206, history acquisition part 11d requests from communication control part 11b transmission of the call history with respect to telephone set 1 a.

When the call history transmitted from telephone set 1a is received, in step 207 history acquisition part 11d checks whether the dummy telephone number matches the beginning or end telephone number of the received outgoing call history. In this manner, history acquisition part 11d checks whether the outgoing call history is the one transmitted by telephone set 1a from which transmission of the outgoing call history has been requested.

When the evaluation result in step 207 is that the telephone numbers match each other, order evaluation part 11e checks whether the dummy telephone number is at the beginning of the received outgoing call history in step 208.

When it is concluded in step 208 that the position is at the beginning of the outgoing call history, order evaluation part 11e sets the value of the setting flag at "1" in step 209, which indicates that the order of the telephone numbers in the outgoing call history is ascending order.

On the other hand, when it is concluded that that the position is not at the beginning of the outgoing call history, order evaluation part 11e sets the value of the setting flag at "2" in step 210, which indicates that the temporal order of the call history is descending order.

In step 211, order evaluation part 11e changes the order of the telephone numbers in the received outgoing call history by reversing the order to ascending order.

In step 212, registration part 11a causes the outgoing call history received from telephone set 1 a to be stored together with the setting flag and to be correlated with device address DA1 in storage part 13.

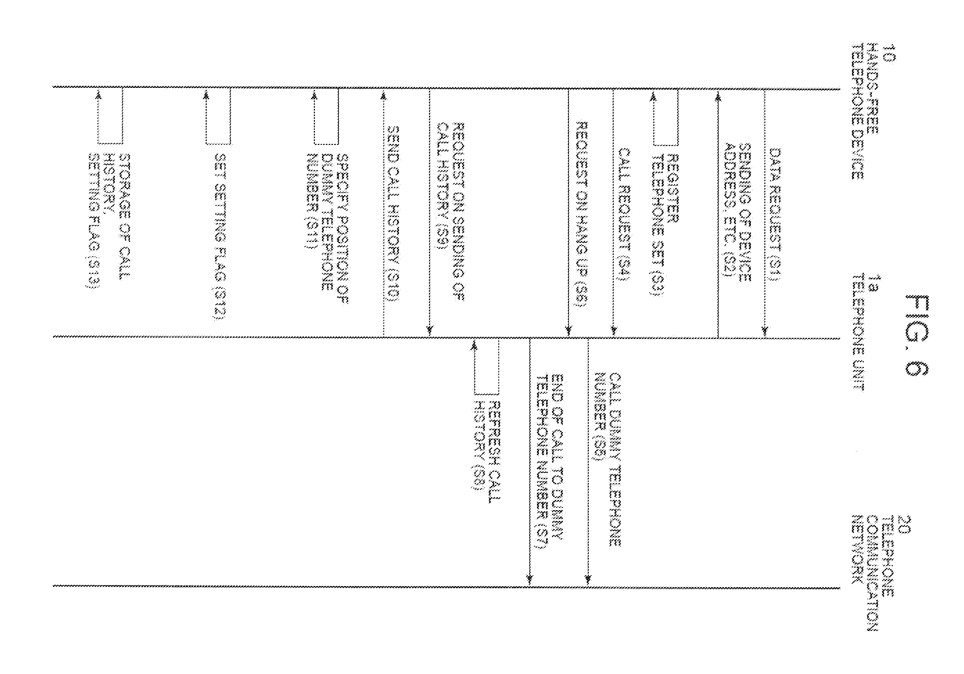

FIG. 6 is a sequence chart illustrating the processing performed in this embodiment of hands-free telephone device 10. The instructions and information exchanged among hands-free telephone device 10, telephone set 1a and telephone communication network 20 when processing is performed is explained.

Initially, the user uses operation input part 15 to issue an instruction for the registration of telephone set 1 a with hands-free telephone device 10, and hands-free telephone device 10 sends telephone set 1 a a request to transmit the data needed for registration (S1).

When telephone set 1 a receives the data transmission request, the data needed for registration of device address DA1, etc., for telephone set 1a are sent to hands-free telephone device 10 (S2).

As a result, telephone set 1 a is registered in hands-free telephone device 10 as a telephone set that can be used with hands-free telephone device 10 (S3).

Communication control part 11 b of hands-free telephone device 10 then requests telephone set 1a to call a preset dummy telephone number (S4). Upon receiving this request, telephone set 1 a calls the dummy telephone number (S5).

After a prescribed time has elapsed since the request to place the call, communication control part 11 b requests that telephone set 1 a end the call (S6). Upon receiving this instruction, telephone set 1a stops calling the dummy telephone number (S7).

As a result, telephone set 1 a refreshes the outgoing call history by adding an entry to the outgoing call history that contains the latest call to the dummy telephone number in the (S8).

History acquisition part 11d of hands-free telephone device 10 requests that telephone set 1a transmit the outgoing call history (S9). Upon receiving this request, telephone set 1a transmits the outgoing call history to the hands-free telephone device (S10).

History acquisition part 11d of hands-free telephone device 10 specifies the position of the dummy telephone number in the received outgoing call history (S11), and based on the specified position, sets the value of the setting flag of the outgoing call history (S12).

The received outgoing call history and the setting flag that has been set are stored in storage part 13 correlated with device address DA1 of telephone set 1 a (S13).

Hands-free telephone device 10 includes communication control part 11 b that causes telephone set(s) 1a, 1b to call the prescribed dummy telephone number. When the call to the prescribed dummy telephone number comes to an end, history acquisition part 11d acquires the outgoing call history of the telephone set, and based on the position of the dummy telephone number in the outgoing call history, order evaluation part 11e evaluates the temporal order of the outgoing call history.

As a result, when hands-free telephone device 10 receives the outgoing call history from telephone set 1a by specifying the most recently called telephone number, it is possible to evaluate the storage order of the acquired outgoing call history, and it is possible to display the acquired outgoing call history in either reverse chronological order or chronological order. Consequently, it is possible to provide improved convenience for the user. This is true even if the time data cannot be obtained together with the outgoing call history.

Also, even if the user is not calling from telephone set 1a, it is still possible to determine the temporal order of the outgoing call history of telephone set 1a.

In addition, when the most recent telephone number and the least recent telephone number in the outgoing call history are the same, and it is thus impossible to evaluate the storage order of the outgoing call history from the position of the counterpart's telephone number most recently called, it is possible to evaluate the storage order of the acquired outgoing call history and to display the acquired outgoing call history in reverse chronological order or chronological order by using the newest call history based on a call to the dummy telephone number. It is unlikely that the same telephone number will appear as both the most and least recent. Consequently, it is possible to provide improved convenience for the user.

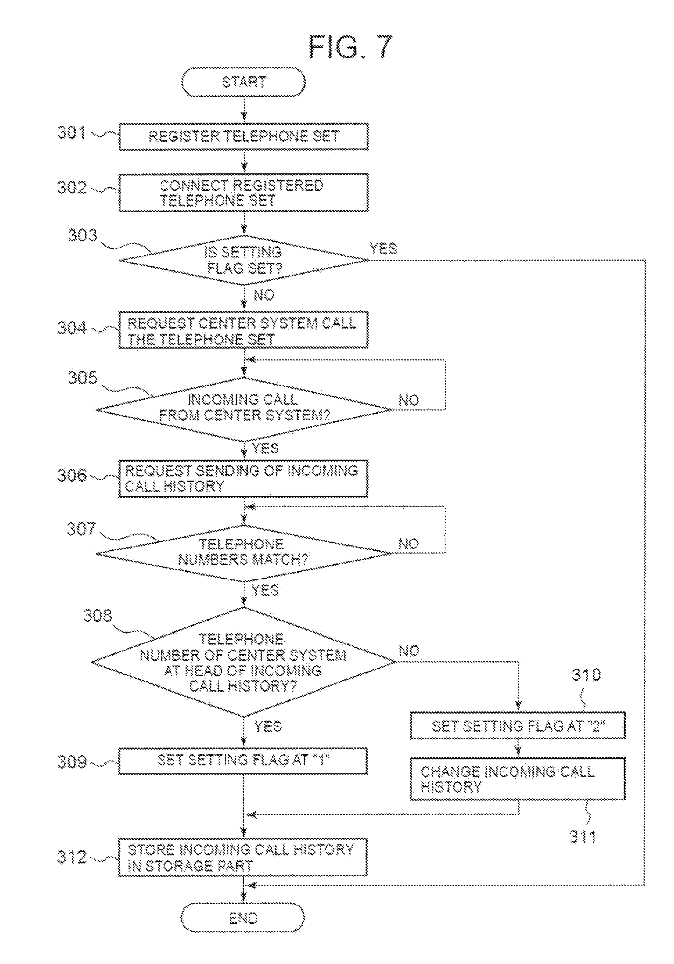

In the following, a third embodiment of processing for hands-free telephone device 10 is explained with reference to the flow chart of FIG. 7.

In the processing performed in this embodiment, hands-free telephone device 10 requests center system 30 to call telephone set 1a, and based on the incoming call history of telephone set 1a that has received a call from center system 30, the temporal order of the incoming call history of telephone set 1a can be specified.

In the following explanation, telephone set 1a from among portable telephone set(s) 1 a, 1 b is used as an example of specifying the temporal order of an incoming call history.

The outgoing and incoming call history of telephone set 1 a are stored separately in storage part 13 of hands-free telephone device 10, and a setting flag is respectively prepared for each of them.

The processing performed in steps 301 and 302 is similar to steps 201 and 202 of FIG. 5, so that it will not be explained in detail again.

In step 303, history acquisition part 11d uses storage part 13 as a reference to check whether the setting flag for the incoming call history of telephone set 1 a has been set.

If it is found in step 303 that the setting flag has been set, which means, for example, that the call history of the telephone set 1 a is stored in the storage part 13 and the temporal order thereof is established, the processing comes to an end. In this case, the telephone numbers of subsequent incoming/outgoing calls are acquired by the telephone number acquisition part 11c and are entered into the call history stored in the storage part 13 by the registration part 11a based on the temporal order of the call history.

That is, the telephone number for the or each outgoing/incoming call is entered into the call history at the appropriate position in dependence on the ascending or descending temporal order according to the value of the setting flag. For example, where the call history is stored in ascending order, the telephone number for each subsequent incoming/outgoing call is entered at the highest level (beginning) of the call history.

On the other hand, if it is found in step 303 that the setting flag has not been set, flow proceeds to the processing in step 304.

In step 304, communication control part 11 b requests telephone set 1 a to call the telephone number of center system 30 to request center system 30 to call telephone set 1a.

In step 305, communication control part 11 b checks whether there is an incoming call from center system 30 to telephone set 1 a.

If it is found in step 305 that there is an incoming call, history acquisition part 11d requests from communication control part 11 b the transmission of the incoming call history with respect to telephone set 1 a in step 306.

Upon receiving the incoming call history sent from telephone set 1a, history acquisition part 11d checks whether the telephone number of the center system is a match with the beginning or end telephone number of the received incoming call history in step 307.

The telephone number of center system 30 is acquired from communication control part 11b by telephone number acquisition part 11c.

When it is concluded in step 307 that the telephone numbers match each other, order evaluation part 11e checks whether the telephone number of center system 30 is positioned at the beginning of the received incoming call history in step 308.

If it is concluded in step 308 that the telephone number is positioned at the beginning of the incoming call history, order evaluation part 11e sets the value of the setting flag at "1" in step 309, which indicates that the order of the telephone numbers in the incoming call history is ascending order.

On the other hand, when it is concluded that the telephone number is not located at the beginning of the incoming call history, order evaluation part 11e sets the value of the setting flag at "2" in step 310, indicating that the temporal order of the incoming call history is descending order.

In step 311, order evaluation part 11e changes the order of telephone numbers in the received incoming call history to ascending order.

In step 312, registration part 11a causes the incoming call history of telephone set 1a, together with the setting flag, to be stored in storage part 13 correlated with device address DA1.

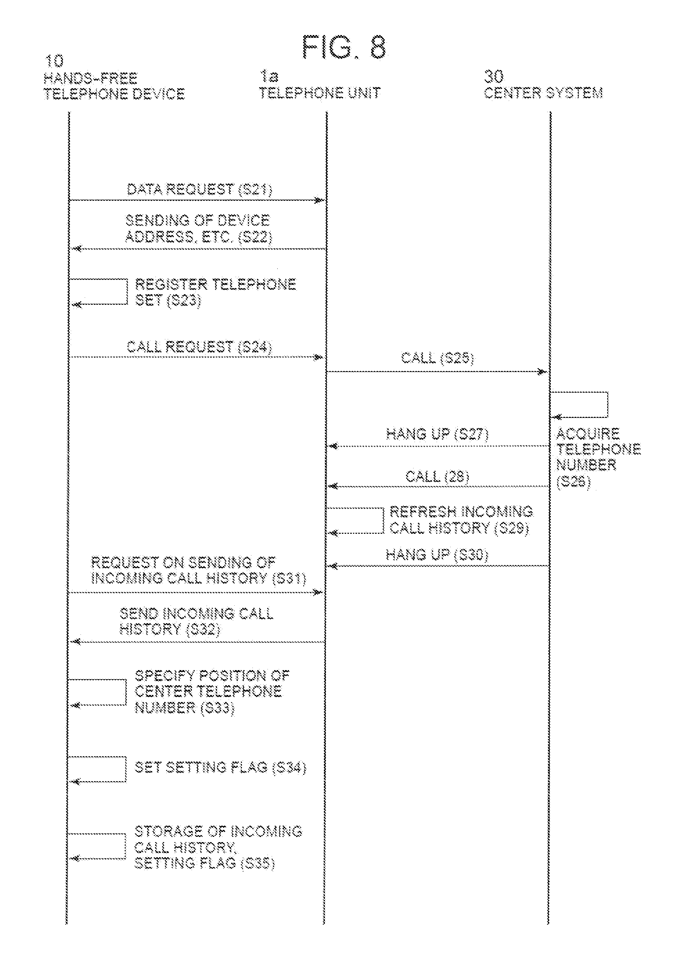

FIG. 8 is a sequence chart illustrating the instructions and information exchanged among hands-free telephone device 10, telephone set 1a and center system 30 in this embodiment.

The processing performed in steps S21-S23 is the same as that performed in steps S1-S3 of FIG. 6, so that it will not be explained in detail again.

After telephone set 1 a is registered as a cell phone that can be used with hands-free telephone device 10, communication control part 11 b requests that telephone set 1 a call the telephone number of center system 30 (S24). Upon receiving this request, telephone set 1 a calls the telephone number of center system 30 (S25).

Center system 30 specifies the telephone number of the caller when there is an incoming call from the outside. Consequently, center system 30 receives the call from telephone set 1 a, specifies the telephone number of telephone set 1 a as the caller (S26) and terminates the connection (S27).

Then center system 30 calls the telephone number of telephone set 1 a as the caller (S28). As a result, telephone set 1 a receives the call from center system 30, and the telephone number of center system 30 is stored in the incoming call history (S29).

In addition, after a prescribed time has elapsed since calling of telephone set 1 a is initiated, center system 30 stops calling telephone set 1a (S30).

History acquisition part 11d of hands-free telephone device 10 requests that telephone set 1a transmit the incoming call history (S31). Upon receiving this request, telephone set 1a transmits the incoming call history to hands-free telephone device 10 (S32).

History acquisition part 11d of hands-free telephone device 10 identifies the position of the telephone number of center system 30 in the received incoming call history (S33), and based on the specified position, it sets the value of the setting flag for the incoming call history (S34).

Then, the received incoming call history and the set setting flag are stored in storage part 13 (S35) correlated with device address DA1 of telephone set 1 a.

In this way, communication control part 11 b operates as follows. When center system 30 is requested to call telephone set(s) 1a, 1b, and reception from center system 30 then comes to an end, history acquisition part 11d acquires the incoming call history of the telephone set. Order evaluation part 11e evaluates the temporal order of the incoming call history based on the position of the telephone number of center system 30 in the incoming call history.

As a result, when hands-free telephone device 10 acquires the incoming call history from telephone set 1a, it is possible by specifying the most recent incoming call telephone number to evaluate the storage order of the acquired incoming call history, and it is possible to display the acquired incoming call history in either reverse chronological order or chronological order. Consequently, it is possible to provide improved convenience for the user. This is true even when the time data cannot be acquired together with the incoming call history.

In this embodiment, when telephone set 1a and hands-free telephone device 10 are connected to each other, center system 30 is requested to call telephone set 1 a. However, a scheme can also be adopted in which the device stands by for the input of user instructions, and center system 30 is then requested to call telephone set 1 a.

In the embodiments, an explanation of the invention has been provided for the following functions of the hands-free telephone device: 1) the counterpart's telephone number is acquired by telephone set 1 a, 2) the call history of telephone set 1 a is acquired when the outgoing/incoming call comes to an end, and 3) based on the position of the counterpart's telephone number in the call history, hands-free telephone device 10 can evaluate the temporal order of the call history stored in telephone set 1.

However, the invention may also be embodied by a program for executing the function of hands-free telephone device 10 in a computer or a medium that stores the program.

In embodiments of the invention, the processing in step 104 can be performed by telephone number acquisition part 11c, and the processing in steps 106-108, 206, 207, 306 and 307 can be performed by history acquisition part 11d. Further, the processing in steps 109-111, 208-210 and 308-310 can be performed by order evaluation part 11e, and the processing in steps 204, 205 and 304 can be performed by communication control part 11b. In addition, the display control part 11f can correspond to the history display.

The above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application Serial No. 2008-013139, filed 23rd January 2008, the contents of which are expressly incorporated herein by reference.

## Claims

1. A telephone apparatus for a vehicle, comprising:
communication means for communicating with a communication device;
telephone number acquisition means for acquiring a telephone number corresponding to a call operation by the communication device;
history acquisition means for acquiring a call history from the communication device; and
evaluation means for evaluating the temporal order of the call history as one of ascending order and descending order based on the position of the telephone number of the call operation in the call history.

2. An apparatus as claimed in claim 1, comprising at least one of:
means for entering the telephone number of the call operation and/or of a subsequent call operation into the call history based on the temporal order;
storage means for storing the call history; and
display means for displaying the call history;

3. A telephone apparatus for a vehicle for communication with a communication device, comprising:
telephone number acquisition means for acquiring a telephone number corresponding to a call operation when the call operation is performed by the communication device;
history acquisition means for acquiring a call history from the communication device;
evaluation means for evaluating the temporal order of the call history as one of ascending order and descending order; and
history display means for displaying the call history;
wherein the apparatus is arranged to enter the telephone number of the or each call operation into the call history based on the temporal order.

4. An apparatus as claimed in any preceding claim, comprising control means arranged to:
control the communication device to perform an initial call operation of calling a prescribed telephone number; and/or
request an external transmitter to perform an initial call operation of calling the communication device.

5. An apparatus as claimed in claim 4, wherein the history acquisition means is arranged to acquire the call history of the communication device after completion of the initial call operation, and wherein the evaluation means is arranged to evaluate the temporal order of the call history as one of ascending order and descending order based on at least one of:
the position of the prescribed telephone number in the outgoing call history; and
the position of the telephone number corresponding to the external transmitter in the call history.

6. An apparatus as claimed in any preceding claim, comprising storage means for storing an identifier corresponding to the communication device with a temporal order flag indicating the temporal order of the call history;
wherein the evaluation means is arranged to evaluate the temporal order of the call history based on the temporal order flag when the communication device corresponding to the identifier is in communication with the vehicle onboard telephone device.

7. An apparatus as claimed in any preceding claim, wherein the communication device is a cell phone and wherein the cell phone is wirelessly in communication with the vehicle onboard telephone device.

8. A method of operating a vehicle onboard telephone device in communication with a portable communication device, the method comprising:
acquiring a telephone number corresponding to a call operation performed by the portable communication device;
acquiring a call history of the portable communication device; and
determining the temporal order of the call history as one of ascending order and descending order based on the position of the telephone number of the call operation in the call history.

9. A method as claimed in claim 8, comprising at least one of:
entering the telephone number of the call operation and/or of a subsequent call operation into the call history based on the temporal order;
storing the call history; and
displaying the call history.

10. A method of displaying a call history of a portable communication device in communication with a vehicle onboard telephone device, the method comprising:
acquiring a telephone number corresponding to a call operation performed by the portable communication device;
acquiring the call history of the portable communication device;
determining the temporal order of the call history as one of ascending order and descending order;
entering the telephone number into the call history in a position based on the temporal order; and
displaying the call history according to the temporal order.

11. A method as claimed in any of claims 8 to 10, comprising:
controlling the portable communication device to perform the call operation by calling a prescribed telephone number; and/or
requesting an external transmitter call the portable communication device.

12. A method as claimed in claim 11, wherein determining the temporal order of the call history comprises evaluating the temporal order of the call history as one of ascending order and descending order based on at least one of:
a position of the prescribed telephone number in an outgoing call history of the portable communication device; and
a position of a telephone number corresponding to the external transmitter in the call history of the portable communication device.

13. A method as claimed in any of claims 8 to 12, comprising storing an identifier corresponding to the portable communication device with a temporal order flag indicating the temporal order of the call history.

14. A method as claimed in claim 13, wherein determining the temporal order of the call history comprises evaluating the temporal order of the call history based on the temporal order flag when the portable communication device corresponding to the identifier is in communication with the vehicle onboard telephone device.

15. A vehicle having an apparatus or adapted to use a method as claimed in any preceding claim.
